# EUROPEAN PATENT APPLICATION

(11) **EP 3 865 877 A1**
(43) Date of publication of application: **18.08.2021**
(21) Application number: 19870640.0
(22) Date of filing: 10.10.2019
(51) Int. Cl.: G01N 35/04

(54) **CUVETTE DISCARDING UNIT**

(30) Priority: 10.10.2018 JP 2018192194
(71) Applicant: LSI Medience Corporation, Tokyo 101-8517 (JP)
(72) Inventor: AZUMA, Miyuki, Tokyo 101-8517 (JP); MORIYA, Masamichi, Fujioka-shi, Gunma 375-0043 (JP); ASANO, Kei, Fujioka-shi, Gunma 375-0043 (JP)
(74) Representative: Ribeiro, James Michael
(86) International application number: PCT/JP2019/040068
(87) International publication number: WO 2020/075818

(57) **Abstract**

A cuvette discarding unit includes: a cuvette discarding container capable of discarding a cuvette from a top opening; an accommodation frame capable of accommodating the cuvette discarding container; and a cuvette receiving part arranged at a top of the cuvette discarding container, and having an input port into which a cuvette is charged. The cuvette receiving part has a movable cuvette receiving bottom part. The cuvette receiving bottom part is held in a retracted posture allowing the cuvette received from the input port to be charged into the cuvette discarding container at a lower position in a state in which the cuvette discarding container is accommodated in the accommodation frame, and held in a temporary receiving posture for receiving the cuvette received from the input port in a state in which the cuvette discarding container is not accommodated in the accommodation frame. This avoids the temporary suspension of the analysis operation during a time in which the accumulated discarded cuvettes are discarded.

## Description

### TECHNICAL FIELD

The present invention relates to a cuvette discarding unit.

### BACKGROUND ART

Conventionally, an autoanalyzer (automatic measuring device) for measuring components in a biological sample such as a blood sample or a urine sample is known (e.g., Patent Document 1). With this kind of autoanalyzer, after dispensing a biological sample and a reagent to a cuvette (specimen container), the resulting content is appropriately subjected to a stirring operation. Then, using optical measuring means, or the like, the change based on the reaction in the cuvette is measured, thereby analyzing the components in the biological sample. Further, spent cuvettes are transported to a cuvette discarding port by, for instance, a cuvette chuck unit of the automatic measuring device, and then are discarded, through a discarding pipe connected to the cuvette discarding port, to a cuvette discarding container provided under the cuvette discarding port.

The discarded cuvettes accumulated in the cuvette discarding container are discarded after extracting the cuvette discarding container from the accommodation space of the cuvette discarding container in the autoanalyzer. Generally, a discarding bag is preset in the cuvette discarding container, so that spent cuvettes are accommodated in the discarding bag. When the discarded cuvettes accumulated in the cuvette discarding container are discarded, the discarding bag including the discarded cuvettes is removed from the cuvette discarding container, and a new discarding bag is set in the cuvette discarding container.

### PRIOR ART DOCUMENT

### Patent Document

[Patent Document 1] WO 2006/107016

### SUMMARY OF INVENTION

### TECHNICAL PROBLEM

However, conventionally, during a time taken from disposing of the discarded cuvettes accumulated in the cuvette discarding container until resetting the empty cuvette discarding container at the autoanalyzer, the measurement operation by the analyzer has to be temporarily suspended. The present invention has been made in view of such a problem. It is an object of the present invention to provide a technology capable of avoiding the temporary suspension of the analysis operation in a period during which discarded cuvettes accumulated in the cuvette discarding container are disposed of.

### SOLUTION TO PROBLEM

A cuvette discarding unit in accordance with the present invention for solving the problem includes: a cuvette discarding container capable of discarding a spent cuvette from a top opening; an accommodation frame capable of accommodating the cuvette discarding container; and a cuvette receiving part arranged at a top of the cuvette discarding container, and having an input port (a charge port) into which a spent cuvette used in an analyzer is charged, wherein the cuvette receiving part has a movable cuvette receiving bottom part, the cuvette receiving bottom part is held in a retracted posture allowing the spent cuvette received from the input port to be charged into the top opening of the cuvette discarding container at a lower position in a state in which the cuvette discarding container is accommodated in the accommodation frame, and is held in a temporary receiving posture for receiving the spent cuvette received from the input port in a state in which the cuvette discarding container is not accommodated in the accommodation frame.

Further, the cuvette discarding unit may be configured to further include urging means for urging the cuvette receiving bottom part in a direction in which the retracted posture is switched to the temporary receiving posture. The cuvette receiving bottom part may have a to-be-pushed member that is pushed by coming in contact with the cuvette discarding container when the cuvette discarding container is accommodated in the accommodation frame from the outside, and the cuvette receiving bottom part may be switched from the temporary receiving posture to the retracted posture, with the to-be-pushed member being pushed against an urging force of the urging means.

Further, the accommodation frame may have a positioning means for suppressing the cuvette discarding container from deviating from a regular position by the urging force of the urging means acting on the cuvette discarding container accommodated inside the accommodation frame via the to-be-pushed member.

Still further, the cuvette discarding unit may be configured such that the cuvette receiving part is mounted to a top plate of the accommodation frame, the top plate has a top plate opening for charging the spent cuvette received from the input port by the cuvette receiving part into the top opening of the cuvette discarding container thereinto, and the top plate opening is formed so as not to interfere with the movable cuvette receiving bottom part.

### ADVANTAGEOUS EFFECT OF INVENTION

The present invention can provide a technology capable of avoiding the temporary suspension of the analysis operation during a time in which the discarded cuvettes accumulated in the cuvette discarding container are disposed of.

### BRIEF DESCRIPTION OF DRAWINGS

[Fig. 1] Fig. 1 is a view showing one example of a composite analyzer.
[Fig. 2] Fig. 2 is a plan view showing one example of a configuration of the inside of a measurement unit accommodation part of the composite analyzer.
[Fig. 3] Fig. 3 is a perspective view of a cuvette discarding unit.
[Fig. 4] Fig. 4 is a front view of an accommodation frame.
[Fig. 5] Fig. 5 is a top view of the accommodation frame.
[Fig. 6] Fig. 6 is a left side view of the accommodation frame.
[Fig. 7] Fig. 7 is a right side view of the accommodation frame.
[Fig. 8] Fig. 8 is a view for illustrating the detailed structure of a cuvette receiving part.
[Fig. 9] Fig. 9 is a view for illustrating the detailed structure of the cuvette receiving part.
[Fig. 10] Fig. 10 is a view for illustrating the operation at cuvette discarding unit.
[Fig. 11] Fig. 11 is a view for illustrating the operation at the cuvette discarding unit.
[Fig. 12] Fig. 12 is a view for illustrating the operation at the cuvette discarding unit.
[Fig. 13] Fig. 13 is a view showing the state of a cuvette receiving bottom part with a discarding container accommodated.
[Fig. 14] Fig. 14 is a view showing the state of the cuvette receiving bottom part with the discarding container extracted.

### DESCRIPTION OF EMBODIMENTS

Below, a composite analyzer 1000 to which a cuvette discarding unit 10 and a cuvette discarding unit 10 in accordance with an embodiment are applied will be described by reference to the accompanying drawings.

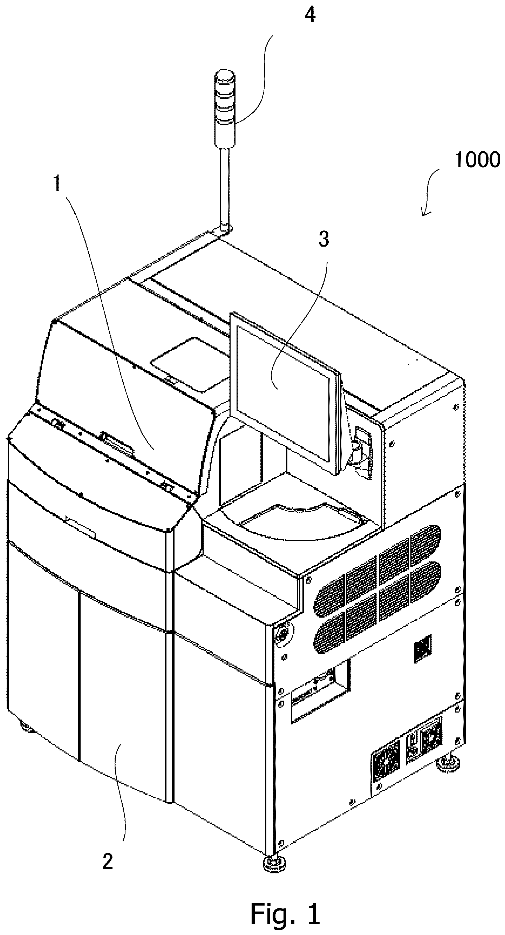

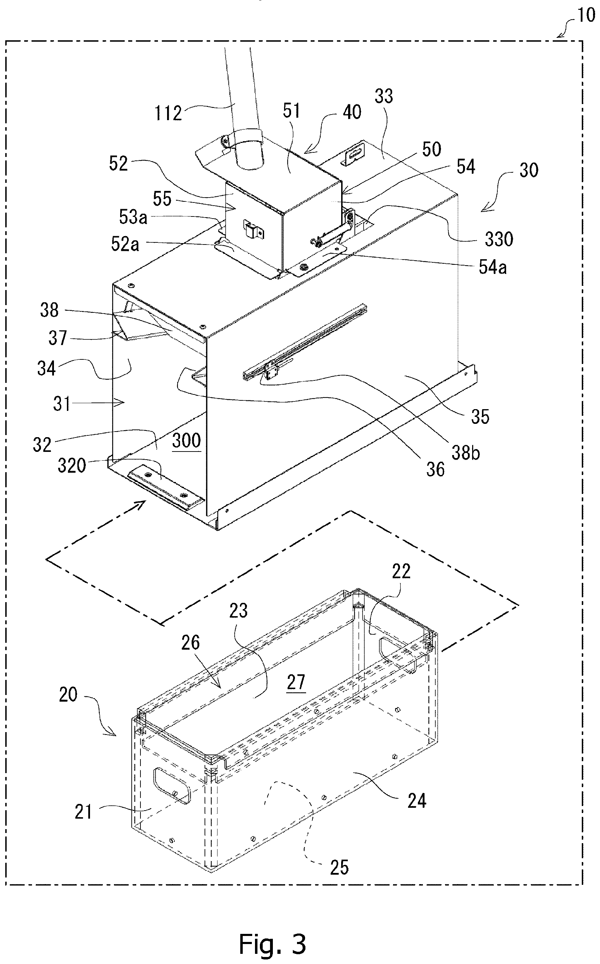

Fig. 1 is the composite analyzer 1000 to which the cuvette discarding unit 10 in accordance with an embodiment is applied. The composite analyzer 1000 is a device for analyzing the components in a biological sample, and can perform, for example, LPIA (Latex Photometric Immuno assay), blood coagulation time measurement, and the like. Further, the composite analyzer 1000 has a measurement unit accommodation part 1, a tank, etc.-accommodating part 2, a monitor 3, a status output part 4, and the like. The measurement unit accommodation part 1 accommodates various measuring units. The tank, etc.-accommodating part 2 accommodates therein tanks for respectively retaining pure water, washing water, and drained water, the cuvette discarding unit 10 for disposing of spent cuvettes (see Fig. 3), a computer for controlling the processing performed by the measurement unit accommodation part 1, and the like.

The monitor 3 is connected to the computer, and outputs the measurement progress status, the results, and the like. Further, the monitor 3 may be an input / output device capable of undergoing an input operation by a user such as a touch screen. The status output part 4 is connected to the computer, or the like, and turns on and off, or lights up a warning light for notifying a user of abnormal conditions when the abnormal conditions occur in the processing executed by the measurement unit accommodation part 1.

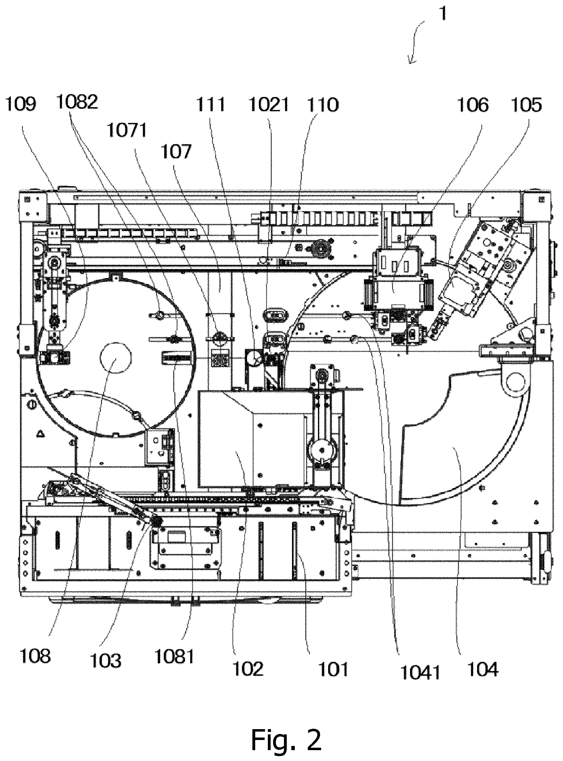

Fig. 2 is a plan view showing one example of the configuration of the inside of the measurement unit accommodation part 1 of the composite analyzer 1000. The measurement unit accommodation part 1 has a transport space 101 of a sample rack, a cuvette feeder 102, a sample nozzle unit 103, a reagent table 104, a reagent lid opening / closing unit 105, a reagent nozzle unit 106, a coagulation table 107, a LPIA table 108, a cuvette chuck unit 109, a rail 110, and a cuvette discarding port 111.

The cuvette feeder 102 supplies cuvettes in a prescribed shape for use at the composite analyzer 1000. Incidentally, cuvettes are supplied sequentially one by one from a cuvette supply port 1021.

The sample nozzle unit 103 is a unit having a nozzle connected to a pump, and moving within a prescribed movable range based on the control by the computer, thereby collecting a sample from a blood collection tube, and discharging the sample to the cuvette of the LPIA table 108.

The reagent table 104 is a disk-shaped holding part holding a plurality of reagent bottles for accommodating a reagent therein, and rotating based on the control by the computer. The held reagent bottle is collected at the reagent nozzle unit 106 at a prescribed collection position 1041.

The reagent lid opening / closing unit 105 is a unit moving within a prescribed movable range based on the control by the computer, thereby opening / closing the lid of the reagent bottle.

The reagent nozzle unit 106 is a unit having a nozzle connected to a pump, and moving within a prescribed operation range based on the control by the computer, thereby collecting a reagent from the reagent bottle, and discharging the reagent to the cuvette.

The coagulation table 107 is a holding part including a plurality of holes for arranging and holding a plurality of cuvettes for measuring the degree of coagulation of the contents of the cuvettes. Incidentally, a light source and a light receptive part are arranged across the held cuvette, so that the degree of coagulation is measured based on the absorbance or the transmittance of the contents. Incidentally, with the coagulation table 107, attachment and detachment of the cuvette are performed by the cuvette chuck unit 109 at a prescribed attachment and detachment position 1071.

The LPIA table 108 is a disk-shaped holding part for arranging and holding a plurality of cuvettes in a circular shape in a plan view, and rotating based on the control by the computer for measuring the antigen amount in the specimen by LPIA. The held cuvette is attached and detached by the cuvette chuck unit 109 at a prescribed attachment and detachment position 1081, and a reagent is dispensed at a prescribed dispense position 1082.

The cuvette chuck unit 109 moves within a prescribed movable range based on the control by the computer, and holds and moves the cuvette. Further, the cuvette chuck unit 109 holds and drops the cuvette at the attachment and detachment position of the coagulation table 107 or the LPIA table 108, the cuvette supply port 1021, the cuvette discarding port 111, or the like. Further, the rail 110 is a linear rail. The reagent nozzle unit 106 and the cuvette chuck unit 109 are respectively connected to the rail 110, and can move in roughly parallel with the rail 110 along the direction of extension of the rail 110.

The cuvette discarding port 111 is an opening communicating with the cuvette discarding unit 10 (see Fig. 3) housed in the tank, etc.-accommodating part 2, and can discard the cuvettes, and the like in the cuvette discarding port 111. For example, after carrying out the latex coagulation measurement and the coagulation time measurement, spent cuvettes are transported from the attachment and detachment position 1071 or the attachment and detachment position 1081 to the cuvette discarding port 111 by the cuvette chuck unit 109, and are dropped in the cuvette discarding port 111, thereby to be discarded to the cuvette discarding unit 10. The cuvette discarding unit 10 is preferably arranged under the cuvette discarding port 111 (see Fig. 2) .

Fig. 3 is a perspective view of the cuvette discarding unit 10 in accordance with an embodiment. The cuvette discarding unit 10 has a cuvette discarding container 20, an accommodation frame 30 capable of accommodating the cuvette discarding container 20 therein, and a cuvette receiving part 40. The cuvette discarding container 20 shown in Fig. 3 is a box type container in a rectangular parallelepiped shape having a front wall 21, a back wall 22, a left side wall 23, a right side wall 24, and a bottom plate 25. Further, the cuvette discarding container 20 has a top opening 26 open at the top surface, and includes a cuvette accommodation part 27 for accommodating spent cuvettes formed in the inside thereof. The cuvette discarding container 20 can store spent cuvettes charged through the top opening 26 in the cuvette accommodation part 27. Incidentally, by setting a discarding bag at the cuvette accommodation part 27 of the cuvette discarding container 20, it is possible to accommodate the spent cuvettes in the discarding bag. In that case, in order to fix the discarding bag, a bag holder is preferably fitted to the upper part of the cuvette discarding container 20.

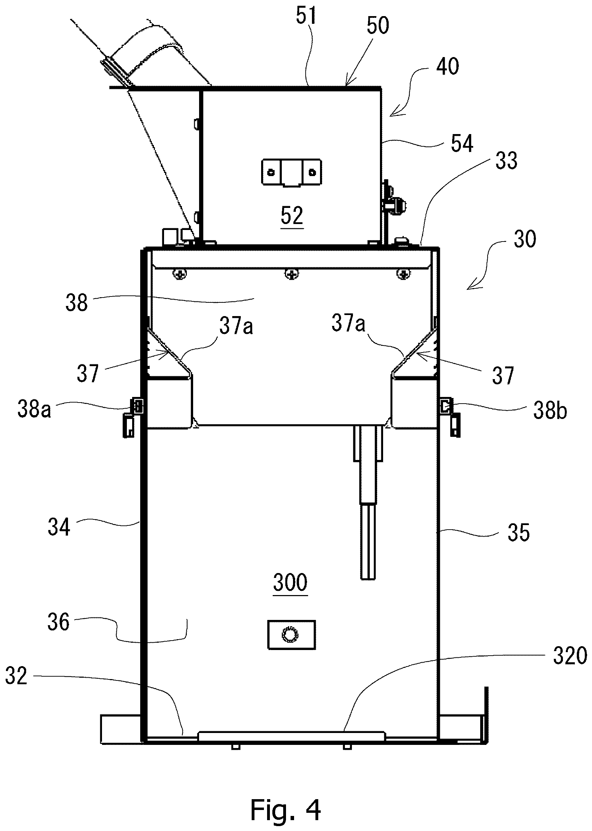

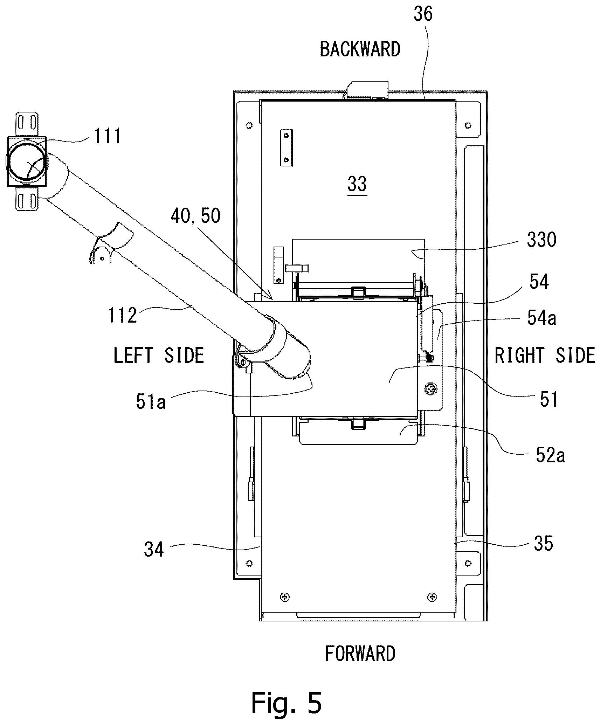

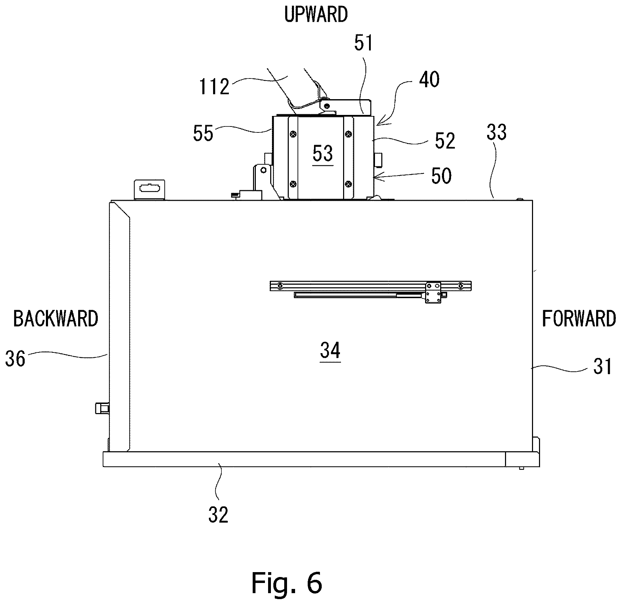

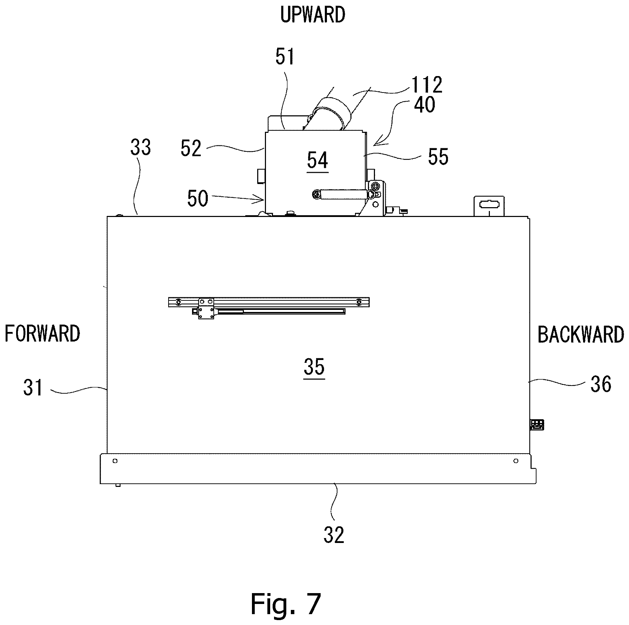

As shown in Fig. 3, an accommodation frame 30 is a frame material having a generally rectangular parallelepiped shape, and is opened at the front, thereby having a front opening 31. Further, Fig. 4 is a front view of the accommodation frame 30. Fig. 5 is a top view of the accommodation frame 30. Fig. 6 is a left side view of the accommodation frame 30. Fig. 7 is a right side view of the accommodation frame 30.

The accommodation frame 30 includes a container accommodation part 300 which is the space for accommodating the cuvette discarding container 20 in the inside thereof formed therein. Further, with the accommodation frame 30, the cuvette discarding container 20 can be inserted from the front opening 31 into the container accommodation part 300, and conversely, the cuvette discarding container 20 in the container accommodation part 300 can be extracted from the front opening 31. Herein, the accommodation frame 30 has a bottom plate 32, a top plate 33, a left side plate 34, a right side plate 35, a back plate 36 (see Fig. 4), and the like. Herein, as shown in Figs. 3 and 5, the top plate 33 is provided with a rectangular top plate opening 330, so that the outside and the inside of the accommodation frame 30 communicate with each other via the top plate opening 330. However, the shape of the top plate opening 330 is not limited to a rectangular shape. Further, as shown in Fig. 4, and the like, the accommodation frame 30 includes sensors 38a and 38b for detecting that the height of the discarded cuvettes accumulated in the cuvette accommodation part 27 of the cuvette discarding container 20 reaches a prescribed height set at the left side plate 34 and the right side plate 35, respectively therein. One of the sensors 38a and 38b is a transmitter-side sensor, and the other is a receiver-side sensor. Incidentally, at the positions at which the sensors 38a and 38b are provided at the left side plate 34 and the right side plate 35, respectively, through holes are provided so as to prevent the beam outputted from the sensors, and the like from being hindered. Incidentally, each output from the sensors 38a and 38b is transmitted to the computer of the composite analyzer 1000, so that when the cuvette discarding container 20 (cuvette accommodation part 27) becomes nearly filled with discarded cuvettes, for example, a warning is displayed on the monitor 3, which can inform a user of the exchange timing of the discarding bag at the cuvette discarding container 20.

As shown in Figs. 3 and 4, at the inner surfaces of the left side plate 34 and the right side plate 35 at the accommodation frame 30, side guide members 37 are mounted. The pair of side guide members 37 are the members provided on the upper part side of the accommodation frame 30, and for guiding the spent cuvettes dropping from above to the top opening 26 of the cuvette discarding container 20. The side guide member 37 has a guide surface 37a. The spent cuvettes slip on the guide surface 37a, and drop diagonally downward, thereby to be charged into the cuvette accommodation part 27. Further, to the front edge side of the top plate 33 at the accommodation frame 30, a front guide member 38 for guiding spent cuvettes diagonally backward and downward is mounted.

Further, at the portion closer to the front opening 31 of the bottom plate 32 at the accommodation frame 30, a step stopper 320 is protrusively provided. The step stopper 320 extends in parallel with the lateral width direction of the accommodation frame 30. The step stopper 320 is used as a member for performing positioning of the cuvette discarding container 20 when the cuvette discarding container 20 is accommodated in the container accommodation part 300. When the cuvette discarding container 20 is inserted to the container accommodation part 300, the cuvette discarding container 20 crosses the step stopper 320, and with the front end of the cuvette discarding container 20 positioned along the back end edge of the step stopper 320, the cuvette discarding container 20 is set at the regular position in the container accommodation part 300.

Then, the cuvette receiving part 40 will be described. The cuvette receiving part 40 is the site for receiving spent cuvettes transported from the measurement unit accommodation part 1 at the composite analyzer 1000, so that all the spent cuvettes are discarded to the cuvette discarding container 20 through the cuvette receiving part 40.

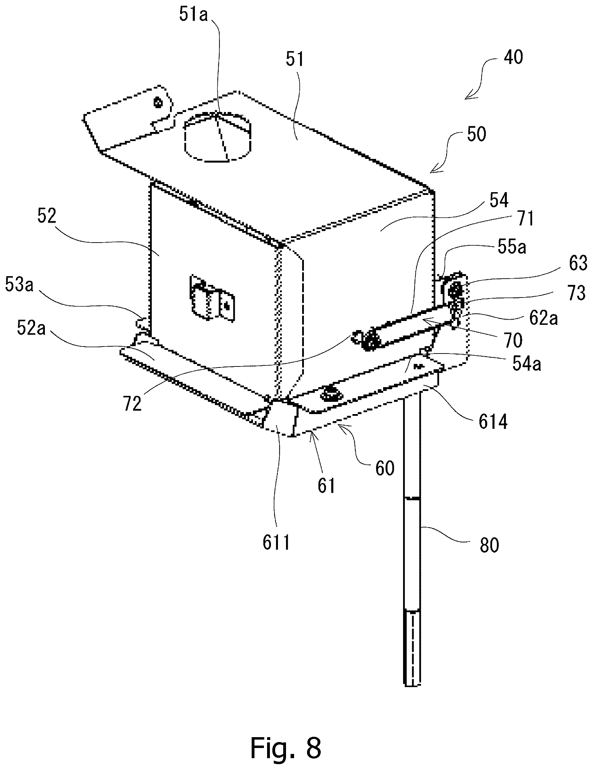

In the example shown in Figs. 3 to 7, the cuvette receiving part 40 is mounted at the top plate 33 of the accommodation frame 30, thereby to be set at the top of the accommodation frame 30. Incidentally, the cuvette receiving part 40 is arranged at the position corresponding to the top plate opening 330 of the top plate 33. Below, also referring to Figs. 8 to 10, the cuvette receiving part 40 will be described in detail. Figs. 8 to 10 are each a view for illustrating the detailed structure of the cuvette receiving part 40.

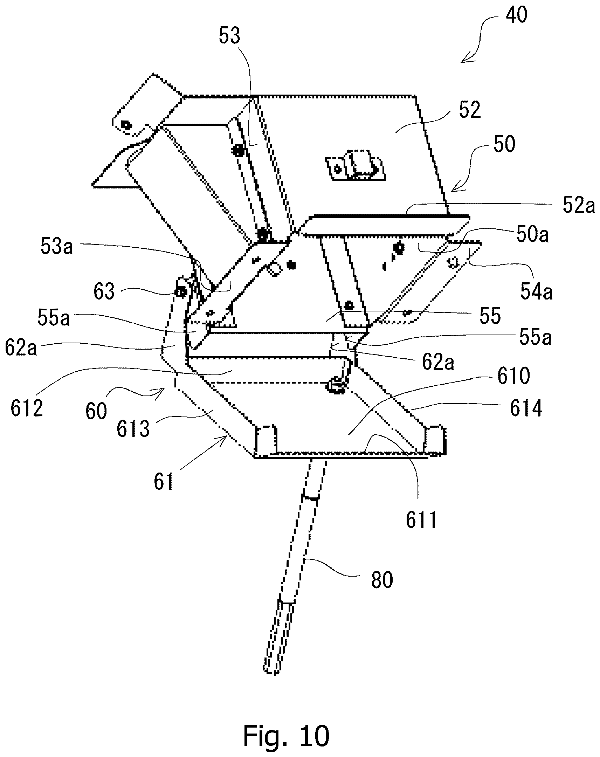

The cuvette receiving part 40 has a duct part 50, and a movable cuvette receiving bottom part 60. The duct part 50 is a frame member in a generally rectangular parallelepiped shape fixed to the top plate 33 of the accommodation frame 30, and has a top plate 51, a front wall 52, a left wall 53, a right wall 54, and a back wall 55. At the lower ends of the front wall 52, the left wall 53, and the right wall 54, fixing brackets 52a, 53a, and 54a are provided facing the lateral direction, respectively. Respective fixing brackets 52a, 53a, and 54a are joined to the edge part of the top plate opening 330 at the top plate 33 of the accommodation frame 30. The duct part 50 includes a duct bottom opening 50a (see Fig. 10) opening on the lower end side thereof. For the duct bottom opening 50a of the duct part 50, and the top plate opening 330 formed at the top plate 33 of the accommodation frame 30, the top plate opening 330 is larger than the duct bottom opening 50a, and both the openings overlap each other so that the duct bottom opening 50a is included in the top plate opening 330. Specifically, the positions of the front edges, the left side edges, and the right side edges at the duct bottom opening 50a and the top plate opening 330 roughly match with each other, and the back edge of the top plate opening 330 is retreated from the back edge of the duct bottom opening 50a toward the backward side of the accommodation frame 30.

Further, at the top plate 51 of the duct part 50, an input port (a charge port) 51a into which spent cuvettes are charged opens. To the input port 51a of the duct part 50 at the cuvette receiving part 40, the other end side of the discarding pipe 112 including the cuvette discarding port 111 formed at one end side is connected. Therefore, the spent cuvettes charged into the cuvette discarding port 111 at the measurement unit accommodation part 1 are transferred to the cuvette receiving part 40 through the discarding pipe 112, and are charged from the input port 51a into the duct part 50.

Then, the movable cuvette receiving bottom part 60 at the cuvette receiving part 40 will be described. As shown in Fig. 10, at the opposite left and right ends of the back wall 55 at the duct part 50, connecting pieces 55a, 55a for mounting the cuvette receiving bottom part 60 are provided protrusively backward.

The cuvette receiving bottom part 60 has a bottom lid 61 capable of covering the duct bottom opening 50a open on the lower end side at the duct part 50, and connecting pieces 62a, 62a provided at the opposite left and right ends at the rear of the bottom lid 61. The bottom lid 61 has, as shown in Fig. 10, a generally tetragonal bottom plate 610, and a front wall 611, a back wall 612, a left side wall 613, and a right side wall 614 provided in a standing manner from respective sides of the bottom plate 610. Incidentally, the front wall 611 of the bottom lid 61 is extended from the bottom plate 610 diagonally forward. Further, the back wall 612, the left side wall 613, and the right side wall 614 of the bottom lid 61 are extended upward vertically from the bottom plate 610. This can prevent the liquid leakage in a temporary receiving posture.

For the movable cuvette receiving bottom part 60, the connecting pieces 62a, 62a provided at the bottom lid 61 are connected to a pair of connecting pieces 55a, 55a provided at the duct part 50 via a rotating shaft member 63. As a result, the cuvette receiving bottom part 60 is rotatable with respect to the duct part 50 about the rotating shaft member 63 as the center. Incidentally, a pair of left and right connecting pieces 62a, 62a and a pair of left and right connecting pieces 55a, 55a each include a bearing hole for inserting each opposite end of the rotating shaft member 63 therethrough provided therein. The rotating shaft member 63 is inserted to the bearing holes, which makes the connecting pieces 62a, 62a of the cuvette receiving bottom part 60 rotatable with respect to the connecting pieces 55a, 55a of the duct part 50.

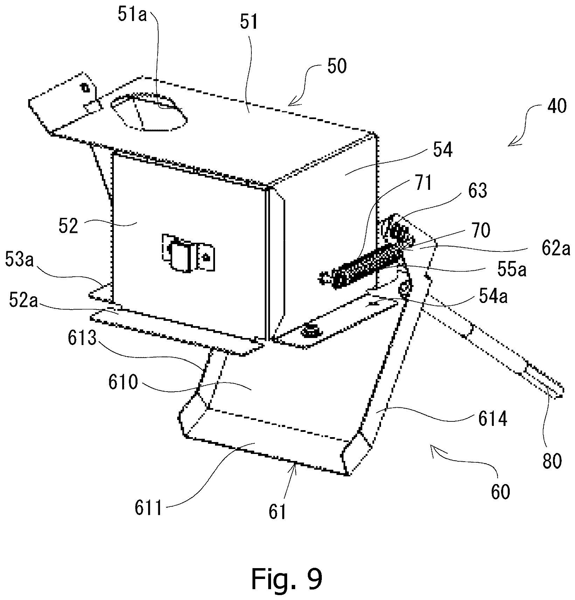

Further, the cuvette receiving part 40 in the present embodiment has an urging mechanism 70 (urging means) as shown in Fig. 8. The urging mechanism 70 includes an urging spring 71, and tether parts 72 and 73 for tethering the opposite ends of the urging spring 71. The tether part 72 is fixed to the right wall 54 of the duct part 50, and tethers one end of the urging spring 71. Further, the tether part 73 is fixed to the connecting pieces 62a, 62a of the cuvette receiving bottom part 60, and tethers the other end of the urging spring 71. As shown in Fig. 8, the tether part 73 at the urging mechanism 70 is provided at a position closer to the bottom lid 61 than the position of the rotating shaft member 63. For this reason, the elastic force with which the urging spring 71 tries to shrink acts on the cuvette receiving bottom part 60. As a result, the cuvette receiving bottom part 60 is continuously urged in the direction in which the cuvette receiving bottom part 60 covers the duct bottom opening 50a of the duct part 50. Incidentally, in Figs. 9 and 10, the urging mechanism 70 in the cuvette receiving part 40 is not shown.

Herein, as shown in Fig. 10, the cuvette receiving bottom part 60 in the cuvette receiving part 40 has an operating rod 80. The operating rod 80 is, as shown in Fig. 10, a rod-shaped member joined to the bottom plate 610 of the bottom lid 61, and is extended vertically from the bottom plate 610 downward. Further, as shown in Fig. 10, the operating rod 80 is joined to the bottom lid 61 at the position in the vicinity of the back end of the bottom plate 610. Although described in details later, the operating rod 80 functions as a to-be-pushed member to be pushed by coming in contact with the back wall 22 of the cuvette discarding container 20 when the cuvette discarding container 20 is accommodated in the accommodation frame 30 from the outside of the accommodation frame 30, and has a function of switching the posture of the cuvette receiving bottom part 60 (bottom lid 61).

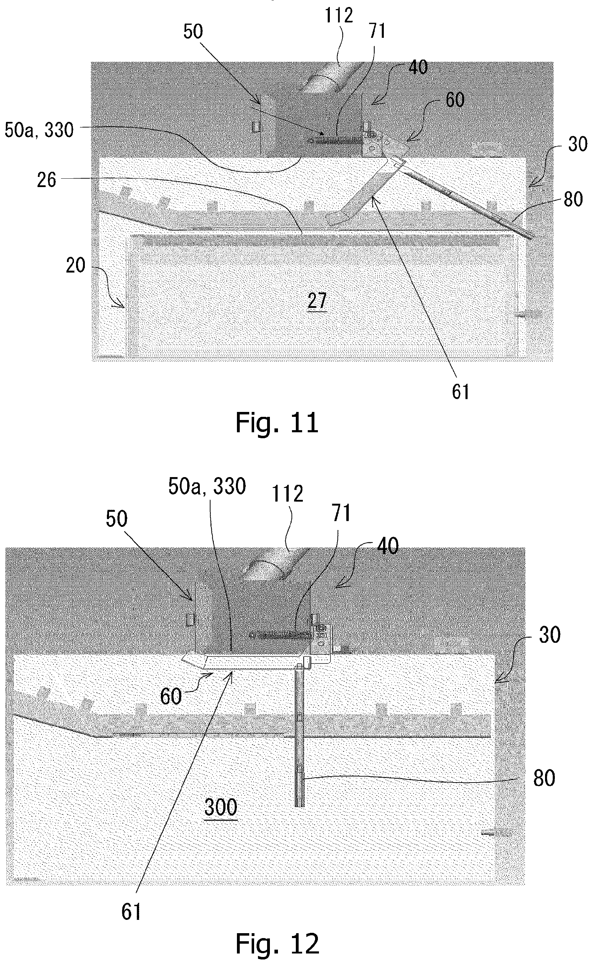

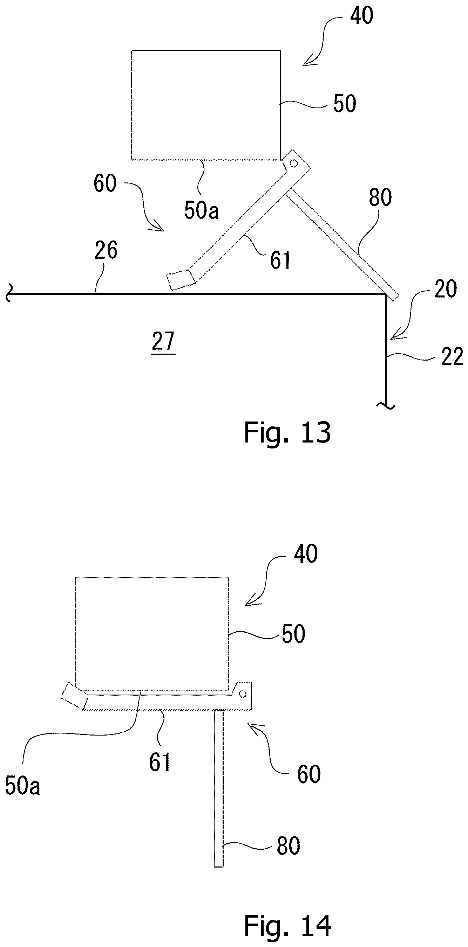

Figs. 11 and 12 are each a view for illustrating the operation at the cuvette discarding unit 10. Fig. 11 shows the state in which the cuvette discarding container 20 is accommodated in the container accommodation part 300 of the accommodation frame 30 (which will be hereinafter referred to as the "discarding container accommodated state"). Fig. 12 shows the state in which the cuvette discarding container 20 is extracted from the container accommodation part 300 of the accommodation frame 30 (which will be hereinafter referred to as the "discarding container extracted state"). Fig. 13 is a view showing the state of the cuvette receiving bottom part 60 in the discarding container accommodated state. Fig. 14 is a view showing the state of the cuvette receiving bottom part 60 in the discarding container extracted state. Incidentally, in Figs. 13, 14, and the like, the urging spring 71 is not shown.

Herein, in the discarding container accommodated state, as shown in Figs. 11 and 13, by the contact with the back wall 22 of the cuvette discarding container 20, the operating rod 80 is held in the state pushed backward in the container accommodation part 300 against the elastic force (urging force) of the urging spring 71 (which will be hereinafter referred to as the "rod pushed state"). In other words, the operating rod 80 is adjusted in the length so as to be held in the rod pushed state when the cuvette discarding container 20 is accommodated in the container accommodation part 300 of the accommodation frame 30.

Then, as shown in Fig. 11, when the operating rod 80 is in the rod pushed state, the cuvette receiving bottom part 60 (bottom lid 61) is held in the retracted posture in which it is retracted (retreated) from the duct bottom opening 50a so as not to cover the duct bottom opening 50a of the duct part 50. With the cuvette receiving bottom part 60 (bottom lid 61) held in the retracted posture, the spent cuvettes received from the input port 51a of the cuvette receiving part 40 (duct part 50) through the discarding pipe 112 pass though the duct bottom opening 50a and the top plate opening 330, and are charged into the top opening 26 of the cuvette discarding container 20 positioned thereunder, and then are discarded to the cuvette accommodation part 27 of the cuvette discarding container 20.

Then, when the cuvette discarding container 20 (cuvette accommodation part 27) has become nearly filled with discarded cuvettes, and the exchange timing of the discarding bag at the cuvette discarding container 20 has come, a user performs the discarding operation of cuvettes while wearing a proper protective tool. Namely, while lifting the cuvette discarding container 20 so as not to get snagged on the step stopper 320 at the front with the doors, and the like of the tank, etc.-accommodating part 2 including the cuvette discarding unit 10 accommodated therein open, the cuvette discarding container 20 is fully extracted from the container accommodation part 300 at the accommodation frame 30. Then, the discarding bag including discarded cuvettes therein is extracted from the cuvette discarding container 20, and a new discarding bag is set at the cuvette discarding container 20.

In the related art, there has been no choice but to temporarily suspend the measurement operation by a device during the time during which the discarding operation of discarded cuvettes accumulated in the cuvette discarding container (the exchange operation of the discarding bag) is performed.

In contrast, with the cuvette discarding unit 10 in the present embodiment, as shown in Fig. 12, when the cuvette discarding container 20 is extracted from the container accommodation part 300 of the accommodation frame 30 by a user, resulting in the discarding container extracted state, the rod pushed state of the operating rod 80 due to the contact with the back wall 22 of the cuvette discarding container 20 is released. For this reason, the elastic force (urging force) of the urging spring 71 at the urging mechanism 70 rotates the cuvette receiving bottom part 60 about the rotating shaft member 63 as the center in the direction in which the cuvette receiving bottom part 60 covers the duct bottom opening 50a of the duct part 50, so that as shown in Figs. 12 and 14, the cuvette receiving bottom part 60 covers the duct bottom opening 50a of the duct part 50. In this state, the cuvette receiving bottom part 60 is held in the temporary receiving posture for receiving spent cuvettes received from the input port 51a of the cuvette receiving part 40 (duct part 50) by the bottom lid 61. In the present embodiment, the urging spring 71 at the urging mechanism 70 corresponds to the urging means for urging the cuvette receiving bottom part 60 in the direction of switching from the retracted posture to the temporary receiving posture.

As described above, with the cuvette discarding unit 10 in the present embodiment, at the time in which the cuvette discarding container 20 is extracted from the container accommodation part 300 of the accommodation frame 30, the posture of the cuvette receiving bottom part 60 is switched from being held in the retracted posture to the temporary receiving posture. For this reason, during the time during which the cuvette receiving bottom part 60 is held in the temporary receiving posture, the spent cuvettes transported through the discarding pipe 112 can be temporarily received by the bottom lid 61, and can be held on the bottom lid 61. As a result, also during the discarding operation of discarded cuvettes accumulated in the cuvette discarding container 20 (during the exchange operation of the discarding bag), the analysis operation by the composite analyzer 1000 can be continuously performed, and the temporary suspension of the analysis operation can be avoided. Further, the cuvette receiving part 40 may have a sensor for monitoring the number of discarded cuvettes accumulated at the bottom lid 61. This can inform a user of the time left for the discarding operation.

Then, after completion of the discarding operation of the discarded cuvettes accumulated in the cuvette discarding container 20 (the exchange operation of the discarding bag), during the process in which the emptied cuvette discarding container 20 is inserted into the container accommodation part 300 of the accommodation frame 30, the back wall 22 of the cuvette discarding container 20 pushes the operating rod 80 backward. As a result, the cuvette receiving bottom part 60 (bottom lid 61) joined to the operating rod 80 rotates against the elastic force (urging force) of the urging spring 71, and is switched from the temporary receiving posture to the retracted posture. As a result, the spent cuvettes temporarily stocked in the bottom lid 61 of the cuvette receiving bottom part 60 during the time during which the cuvette discarding container 20 is extracted from the accommodation frame 30 drop from the bottom lid 61 of the cuvette receiving bottom part 60, and are discarded to the cuvette accommodation part 27 of the emptied cuvette discarding container 20 through the top opening 26 positioned thereunder. Subsequently, until the cuvette discarding container 20 is extracted from the accommodation frame 30 again, the posture of the cuvette receiving bottom part 60 is held in the retracted posture, so that the cuvette receiving bottom part 60 does not cover the duct bottom opening 50a. For this reason, the spent cuvettes newly fed from the discarding pipe 112 to the cuvette receiving part 40 can be dropped to the top opening 26 of the cuvette discarding container 20 situated thereunder without being temporarily received by the cuvette receiving bottom part 60, and can be discarded to the cuvette accommodation part 27. Incidentally, the cuvette discarding unit 10 in the present embodiment may be provided with a sensor for detecting that the posture of the cuvette receiving bottom part 60 has been switched between the temporary receiving posture and the retracted posture.

Incidentally, for the accommodation frame 30 in accordance with the present embodiment, in order to charge the spent cuvettes received by the cuvette receiving part 40 (duct part 50) from the input port 51a to the top opening 26 of the cuvette discarding container 20, a top plate opening 330 is formed at the top plate 33 of the accommodation frame 30. Further, the cuvette receiving bottom part 60 of the cuvette receiving part 40 is of a movable type, and the posture can be switched between the retracted posture and the temporary receiving posture. Thus, the top plate opening 330 at the accommodation frame 30 is formed so as not to interfere with the movable cuvette receiving bottom part 60. This can avoid that, for example, the cuvette receiving bottom part 60 interferes with the edge of the top plate opening 330, making switching to a desirable posture impossible when the posture of the cuvette receiving bottom part 60 is switched between the retracted posture and the temporary receiving posture. Incidentally, any accommodation frame 30 is acceptable so long as it can fix the positions of the cuvette receiving part and the discarding container 20, and the shape is not limited. Further, to the top plate of the accommodation frame 30, or the like, the cuvette receiving part 40 may be mounted, or the cuvette receiving part 40 may be set inside the accommodation frame 30.

Further, with the cuvette discarding unit 10 in the present embodiment, the cuvette receiving bottom part 60 at the cuvette receiving part 40 can automatically switch the posture of the cuvette receiving bottom part 60 in conjunction with the insertion operation of the cuvette discarding container 20 to the accommodation frame 30, and the extraction operation of the cuvette discarding container 20 from the accommodation frame 30. Namely, for discarding the discarded cuvettes accumulated in the cuvette discarding container 20, for example, there is even no need to manually set another discarding container for temporary reception different from the cuvette discarding container 20. For this reason, manual operation load will not increase. Further, it is not necessary to manually set a discarding container for temporary reception. For this reason, artificial insertion error will not be caused, and the analysis operation will not be suspended due to the stop of the device caused by the insertion error.

Further, the accommodation frame 30 in the present embodiment has a step stopper 320. For this reason, the cuvette discarding container 20 being accommodated at the regular position in the container accommodation part 300 of the accommodation frame 30 can be suppressed from carelessly deviating from the regular position. Namely, in the present embodiment, the elastic force (urging force) of the urging spring 71 acts on the cuvette discarding container 20 being accommodated in the container accommodation part 300 of the accommodation frame 30 via the operating rod 80 held in the rod pushed state. Then, when the cuvette discarding container 20 is pushed back to the front opening 31 side by the elastic force (urging force) of the urging spring 71 (when deviates from the regular position), conceivably, the cuvette receiving bottom part 60 is carelessly switched from the retracted posture to the temporary receiving posture.

In contrast, with the accommodation frame 30 in the present embodiment, the provision of the step stopper 320 (positioning means) suppresses the cuvette discarding container 20 accommodated in the accommodation frame 30 from carelessly deviating from the regular position. This can preferably suppress the following: for example, regardless of the fact that the number of discarded cuvettes accumulated in the cuvette discarding container 20 is small, the cuvette receiving bottom part 60 is switched from the retracted posture to the temporary receiving posture unintentionally, which makes it impossible for spent cuvettes to be discarded to the cuvette discarding container 20.

Incidentally, the cuvette receiving part 40 in the present embodiment rotates the cuvette receiving bottom part 60 with respect to the duct part 50, thereby switching the posture of the cuvette receiving bottom part 60 between the retracted posture and the temporary receiving posture. However, the present invention is not limited thereto. The posture of the movable cuvette receiving bottom part 60 may only be able to be switched between the retracted posture and the temporary receiving posture, and for example, the cuvette receiving bottom part 60 may be slidably arranged with respect to the duct part 50. Further, the cuvette receiving part 40 may hold a plurality of cuvette discarding containers.

Further, in the present embodiment, using mechanical elements such as the operating rod 80 and the urging spring 71, the posture of the cuvette receiving bottom part 60 is switched between the retracted posture and the temporary receiving posture. However, the following is also acceptable: whether the cuvette discarding container 20 is accommodated in the accommodation frame 30, or not is detected by a sensor, or the like; based on the detection results, using an appropriate driving source, the posture of the cuvette receiving bottom part 60 is switched between the retracted posture and the temporary receiving posture.

### REFERENCE SIGNS LIST

- 10: Cuvette discarding unit
- 20: Cuvette discarding container
- 30: Accommodation frame
- 40: Cuvette receiving part
- 50: Duct part
- 60: Cuvette receiving bottom part
- 61: Bottom lid
- 70: Urging mechanism
- 71: Urging spring

## Claims

1. A cuvette discarding unit comprising:
a cuvette discarding container capable of discarding a spent cuvette from a top opening;
an accommodation frame capable of accommodating the cuvette discarding container therein; and
a cuvette receiving part arranged at a top of the cuvette discarding container, and having an input port into which a spent cuvette used in an analyzer is charged, wherein
the cuvette receiving part has a movable cuvette receiving bottom part,
the cuvette receiving bottom part is,
held in a retracted posture allowing the spent cuvette received from the input port to be charged into the top opening of the cuvette discarding container at a lower position in a state in which the cuvette discarding container is accommodated in the accommodation frame, and
held in a temporary receiving posture for receiving the spent cuvette received from the input port in a state in which the cuvette discarding container is not accommodated in the accommodation frame.

2. The cuvette discarding unit according to claim 1, further comprising urging means for urging the cuvette receiving bottom part in a direction in which the retracted posture is switched to the temporary receiving posture, wherein
the cuvette receiving bottom part has a to-be-pushed member that is pushed by coming in contact with the cuvette discarding container when the cuvette discarding container is accommodated in the accommodation frame from outside, and
the cuvette receiving bottom part is switched from the temporary receiving posture to the retracted posture, with the to-be-pushed member being pushed against an urging force of the urging means.

3. The cuvette discarding unit according to claim 2, wherein
the accommodation frame has positioning means for suppressing the cuvette discarding container from deviating from a regular position by the urging force of the urging means acting on the cuvette discarding container accommodated inside the accommodation frame via the to-be-pushed member.

4. The cuvette discarding unit according to any one of claims 1 to 3, wherein
the cuvette receiving part is mounted to a top plate of the accommodation frame,
the top plate has a top plate opening for charging the spent cuvette, received from the input port by the cuvette receiving part, into the top opening of the cuvette discarding container, and
the top plate opening is formed so as not to interfere with the movable cuvette receiving bottom part.
